Europäisches Patentamt

European Patent Office

Office européen des brevets

(11) Veröffentlichungsnummer : **0 082 304**
**B1**

## EUROPÄISCHE PATENTSCHRIFT

(45) Veröffentlichungstag der Patentschrift :
07.05.86

(21) Anmeldenummer : 82110527.7

(22) Anmeldetag : 15.11.82

(51) Int. Cl.⁴ : **A 61 B   5/00, G 07 C 11/00**

(54) Verfahren zur Identifizierung einer Person unter Verwendung von Sprach- und Gesichtserkennung und Einrichtung zur Durchführung des Verfahrens.

(30) Priorität : **20.11.81 US 323657**

(43) Veröffentlichungstag der Anmeldung :
**29.06.83 Patentblatt 83/26**

(45) Bekanntmachung des Hinweises auf die Patenterteilung : **07.05.86 Patentblatt 86/19**

(84) Benannte Vertragsstaaten :
**AT CH DE FR GB IT LI**

(56) Entgegenhaltungen :
AT-B-   363 580
DE-A- 2 801 927
DE-A- 2 920 041
DE-B- 2 254 597
US-A- 3 239 936

(73) Patentinhaber : **Siemens Aktiengesellschaft Berlin und München Wittelsbacherplatz 2 D-8000 München 2 (DE)**

(72) Erfinder : **Rüll, Hartwig E., Dr. Balduin-Helmstrasse 39 D-8080 Fürstenfeldbruck (DE)**
Erfinder : **Feix, Wolfgang H. 812 A Country Club Pkwy Mt. Laurel, NJ 08054 (US)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf ein Verfahren zur Identifizierung einer Person unter Verwendung von Sprach- und Gesichtserkennung und eine Einrichtung zur Durchführung des Verfahrens.

Verfahren zur Spracherkennung werden ausgiebig in Personenzugangskontrollsystemen verwendet, um den Zugang zu geheimen Einrichtungen zu begrenzen und um die unerlaubte Benutzung von Informationseingabe und -ausgabeeinrichtungen von Rechnern und anderen Einheiten zu verhindern. Diese Systeme analysieren stimmspezifische Eingangssignale, um die Identität oder Nichtidentität einer Person festzustellen, die Zugang zu der Einrichtung sucht oder die Einrichtung benutzen will.

In einem typischen System dieser Art wird die Person, die Zugang sucht, aufgefordert, ein bestimmtes Schlüsselwort aus einer Folge von vorher festgelegten Schlüsselworten zu äußern. Die Äußerung des Schlüsselwortes wird durch eine Spracherkennungseinrichtung erfaßt und analysiert. Die erfaßten stimmspezifischen Merkmale des geäußerten Schlüsselwortes werden mit vorher gespeicherten stimmspefizischen Merkmalen verglichen, die der Äußerung desselben Schlüsselwortes durch eine früher überprüfte, bekannte Person zugeordnet sind. Der Zugang wird erlaubt, wenn die miteinander verglichenen stimmspezifischen Merkmale des geäußerten Schlüsselwortes und des gespeicherten Schlüsselwortes genügend ähnlich sind, um die Identität der den Zugang suchenden Person mit der bekannten Person anzuzeigen. Ein Beispiel für ein derartiges Spracherkennungssystem ergibt sich aus der US-PS 4 239 936.

Eine Personenidentifikation, die ein derartiges Spracherkennungssystem verwendet, ist nur dann genügend genau und zuverlässig, wenn eine unbegrenzte Rechenzeit für die Analyse des geäußerten Schlüsselwortes zur Verfügung steht. Um eine unangemessene Wartezeit zu vermeiden, muß in der Praxis der Erkennungsprozeß innerhalb einer Zeit von ungefähr 3 Sekunden vom Zugangswunsch an beendet sein. Bei einer derart abgekürzten Rechenzeit ist die Personenzugangskontrolle, die allein Spracherkennung verwendet, Identifikationsirrtümern (die falsche Person wird zugelassen oder die richtige Person wird nicht zugelassen) und Fälschung (Stimmeindruck, Bandaufnahmen usw.) ausgesetzt. Weiterhin muß wegen der Schwierigkeit der Erfassung des Beginns und der Dauer der Sprachsignale, die der Äußerung des Schlüsselwortes entsprechen, für das Spracherkennungssystem eine aufwendige Technologie verwendet werden, wobei kostspielige Sprachsignaldauer Erfassungseinheiten umfaßt sind. Schließlich ist festgestellt worden, daß ein Anwachsen des technischen Aufwandes, um eine höhere Spracherkennungsgenauigkeit zu erreichen, nicht zu einem proportionalen Anstieg in der Erfassungsgenauigkeit führt.

Personenzugangskontrollsysteme können auch dadurch ausgeführt werden, daß zur Identifikation der Personen die optische Erkennung benutzt wird. Die optischen Erkennungssysteme benutzen charakteristische Teile des menschlichen Körpers zur Identifikation. Typisch für diese Art von Zugangskontrolle ist die Fingerabdruckerkennung und die Erkennung der Gesichtszüge. Ein derartiges System ist in der US-PS 4 109 237 beschrieben. Dort wird ein Verfahren erläutert, bei dem das Auge der Person durch eine Lichtquelle mit einem ausgewählten Muster abgetastet wird und bei dem der Teil des Lichtmusters erfaßt wird, der von der Netzhaut der Person reflektiert wird. Dabei wird jede Kreuzung des Lichtmusters mit einem Blutgefäß festgestellt. Das dadurch erreichte Kreuzungsmuster wird mit gespeicherten Kreuzungsmustern, die von überprüften und zugelassenen Personen stammen, verglichen. Personenzugangssysteme, die optische Erkennung allein verwenden, erfordern einen noch höheren technischen Aufwand als akustische Erkennungssysteme.

Die der Erfindung zugrundeliegende Aufgabe besteht darin, ein Verfahren und eine Einrichtung zur Identifizierung einer Person anzugeben, die eine Kombination von Spracherkennung und Gesichtserkennung verwendet und das eine grössere Identifikationsgenauigkeit erreicht als wenn entweder Spracherkennung oder Gesichtserkennung allein verwendet wird. Diese Aufgabe wird bei einem Verfahren der eingangs angegebenen Art dadurch gelöst, daß eine charakteristische Folge von Stimmerkmalen bei der Äußerung eines vorgegebenen Schlüsselwortes durch die zu identifizierende Person gebildet wird, daß ein Momentanbild eines durch die Äußerung des Schlüsselwortes sich verändernden Teiles des Gesichtes der Person beim Auftreten eines Schlüsselereignisses gebildet wird, und daß zur Feststellung der Identität oder Nichtidentität der Person sowohl die Folge der Stimmerkmale als auch das Momentanbild verwendet wird.

In einem bevorzugten Ausführungsbeispiel des Verfahrens wird eine erste Korrelationsrate dadurch berechnet, daß die charakteristische Folge der Stimmerkmale bei der Äußerung des vorgegebenen Schlüsselwortes durch die Person durch einen Korrelationsrechner mit einer gespeicherten Folge von Merkmalen, die von einer früheren Äußerung des Schlüsselwortes durch eine bekannte Person abgeleitet worden sind, verglichen wird.

Eine zweite Korrelationsrate wird dadurch berechnet, daß das Momentanbild des durch die Äußerung des Schlüsselwortes sich verändernden Teiles des Gesichtes der Person beim Auftreten eines Schlüsselereignisses verglichen wird mit einem früher aufgenommenen, gespeicherten Bezugsmomentanbild, das bei der Äußerung des Schlüsselwortes zum Schlüsselereignis von der bekannten Person aufgenommen worden ist. Identität der befragten Person mit der bekannten Person besteht dann, wenn die erste und zweite Korrelationsrate über vorgegebenen Koinzidenzschwellen liegen.

Eine Einrichtung zur Durchführung des Verfahrens besteht aus einer Spracherkennungsschaltung, die die charakteristische Folge der Stimmerkmale bei der Äußerung des vorgegebenen Schlüsselwortes durch die zu identifizierende Person erzeugt, aus einer Gesichtserkennungsschaltung, die das Momentanbild eines durch die Äußerung des Schlüsselwortes sich verändernden Teiles des Gesichtes der Person beim Auftreten eines Schlüsselereignisses erzeugt und aus einer Identifizierungsschaltung, die mit der Spracherkennungsschaltung und der Gesichtserkennungsschaltung verbunden ist und die die charakteristische Folge der Stimmerkmale und das Momentanbild dazu verwendet, um die Identität oder Nichtidentität der Person festzustellen.

Vorteilhafterweise kann die Spracherkennungsschaltung aus einem Mikrofon, einem Vorverstärker und einem Filter bestehen.

Die Gesichtserkennungsschaltung kann aus einer Kamera, einem Detektor, einem Speicher und einer Schlüsselereigniserkennungsschaltung bestehen.

Die Identifizierungsschaltung kann einen ersten und zweiten Korrelationsrechner, erste, zweite und dritte Pufferspeicher, eine Mikroprozessorsteuerung und Datenübertragungseinrichtungen enthalten.

Mit dem erfindungsgemäßen Verfahren und mit der erfindungsgemäßen Einrichtung kann ein Personenzugangssystem realisiert werden, das die Kombination von Spracherkennung und Gesichtserkennung verwendet. Dadurch wird eine größere Identifizierungsgenauigkeit und -Sicherheit erreicht.

Anhand eines Ausführungsbeispiels, das in den Figuren dargestellt ist, wird die Erfindung weiter erläutert. Es zeigen

Figur 1 ein Blockschaltbild der Einrichtung eines Personenzugangskontrollsystems gemäß der vorliegenden Erfindung,

Figur 2 die Ausführung eines Korrelationsrechners,

Figur 3 bis 5 schematische Darstellungen einer Person, die ein Schlüsselwort äußert,

Figur 6 eine grafische Darstellung der Sprachsignalenergie aufgetragen über der Zeit bei der Äußerung eines Schlüsselwortes durch die Person entsprechend der Figuren 3 bis 5.

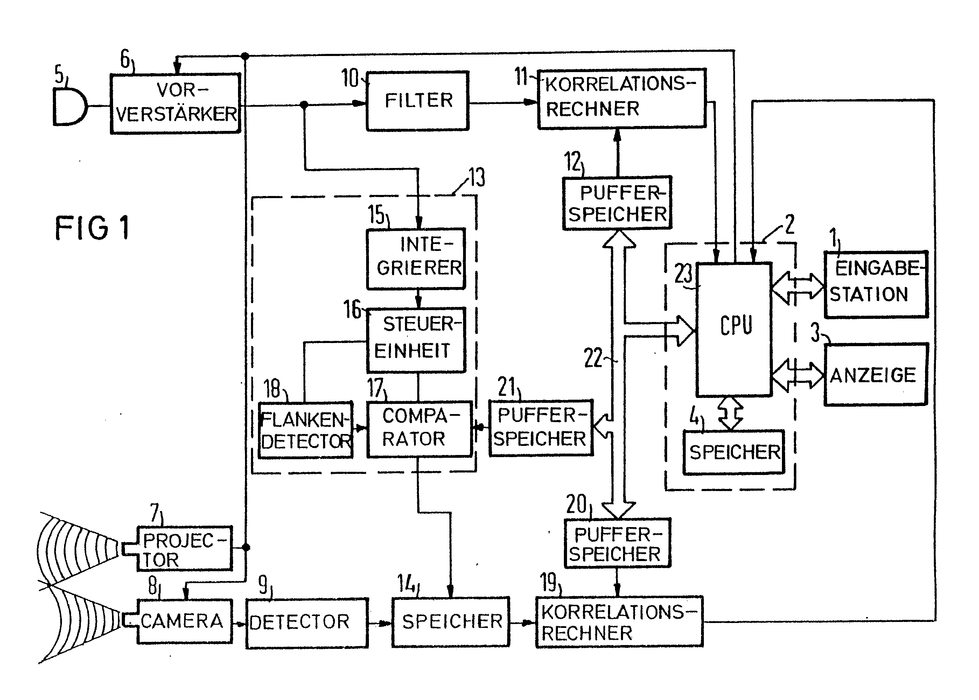

Figur 1 zeigt eine Einrichtung, die die Grundlage eines Personenzugangskontrollsystems bildet, mit der eine Person identifiziert wird, die ein besonderes Schlüsselwort äußert. Das Sprachsignal oder akustische Signal, das von der Person bei der Äußerung des Wortes erzeugt wird, wird erfaßt und dazu verwendet, eine Folge von Stimmerkmalen festzulegen. Gleichzeitig werden bestimmte Gesichtsmerkmale des Individuums, die sich bei der Äußerung des Schlüsselwortes ändern, optisch abgetastet und ein Momentanbild der körperlichen Stellung der Gesichtsmerkmale zu einer vorgegebenen Zeit (dem Schlüsselereignis) bei der Äußerung des Schlüsselwortes aufgenommen. Die Folge der derart erzeugten Stimmerkmale und das derart aufgenommene Momentanbild werden dann beide nacheinander mit gespeicherten Stimmerkmalen und Gesichtsmerkmalen verglichen, die aus einer früheren Äußerung desselben Schlüsselwortes durch eine bekannte Person entwickelt worden sind. Wenn genügende Koinzidenz der aktuellen Stimm- und Gesichtsmerkmalen mit den gespeicherten Stimm- und Gesichtsmerkmalen besteht, wird die befragte Person zum Zugang zugelassen (d. h. die Identität der Person ist festgestellt). Wenn nicht genügend Koinzidenz sowohl bei den Stimm- als auch bei den Gesichtsmerkmalen besteht, wird die befragte Person nicht zum Zugang zugelassen (d. h. die Nichtidentität der Person ist festgestellt).

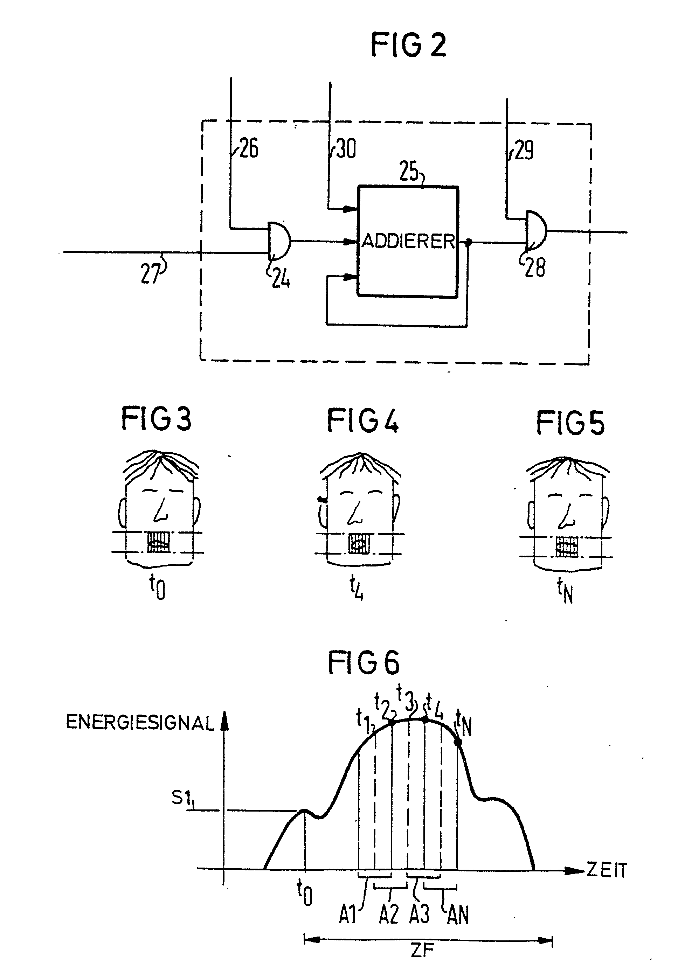

Nach Figur 1 wird der Identifikationsprozeß begonnen, wenn eine Person um Zugang zu einer Sicherheitszone oder ähnlichem verlangt und dazu eine bestimmte Personenidentifikationsnummer wählt oder eine Personenidentifikationskarte in eine Eingabestation steckt, z. B. in eine bekannte Tastatureingabestation 1. Eine Mikroprozessoreinheit 2, z. B. ein Intel SAB 8080 Mikroprozessor, der zur Datenübertragung mit der Eingabestation 1 verbunden ist, erhält die persönliche Identifikationseingangsinformation von der Eingabestation 1. Diese Eingangsinformation legt die Person fest, deren Identität festgestellt werden soll. Nach Erhalt dieser Eingangsinformation überträgt die Mikroprozessoreinheit 2 ein vorgegebenes Schlüsselwort zu der zu überprüfenden Person mit Hilfe einer Anzeige 3, z. B. einer bekannten LED Anzeige. Das Schlüsselwort wird durch Zufallsauswahl unter einer Mehrheit von vorgegebenen Schlüsselworten ausgewählt, die in einem Speicher 4 innerhalb der Mikroprozessoreinheit 2 gespeichert sind. Zur gleichen Zeit aktiviert die Mikroprozessoreinheit 2 ein Mikrofon 5, das mit einem Vorverstärker 6 verbunden ist, und aktiviert ebenso einen Gitterprojektor 7, der einer elektronischen Kamera 8 zugeordnet ist. Der Gitterprojektor 7 projeziert ein Gittermuster auf einen sich beim Sprechen ändernden Teil des Gesichtes der Person. Ein solches Muster kann z. B. die Form eines Linienmusters annehmen, wie es in Figur 3 bis 5 gezeigt ist, das z. B. auf die Mundregion der Person projeziert wird. Der Gitterprojektor 7, der zur Projektion des Gittermusters zu Identifikationszwecken verwendet wird, ist von bekannten Aufbau und ist z. B. beschrieben in M. Fallah, « Biomedical Imaging Processing for Dental Facial Abnormalities », S. 462-464 (Department of Orthodontics, School of Dental Medicine, University of Pittsburgh, Pittsburgh, Pennsylvania).

Wenn das Gittermuster auf das Gesicht der Person projeziert worden ist, wird die elektronische Kamera 8 auf die Mundregion der Person gerichtet, um die Verzerrungen des Gitters auf der Mundregion zu bewerten. Die Kamera 8 kann jede beliebige geeignete optische Abtastungseinrichtung sein, wie z. B. eine Rasterabtastkamera, die für den sichtbaren und/oder infraroten Bereich des elektromagnetischen Spektrums empfindlich ist.

Wenn die Person das Schlüsselwort, das von der Anzeigeeinheit 3 ausgegeben wird, äußert, wird die Mundregion der Person durch die elektronische Kamera 8 abgetastet, z. B. mit einer bei Standardfernsehkameras verwendeten Abtastfrequenz. Analoge Signale, die einer Folge von Momentanbildern der Mundregion des Gesichtes der Person entsprechen, werden dabei zu einem Detektor 9 übertragen. Ein solcher Detektor ist z. B. aus der US-PS 4 109 237 bekannt. Der Detektor 9 wandelt die analogen Signale der Kamera 8 in digitale Signale um, und erzeugt dabei eine Folge von Momentanbildern in der Form von digitalen Signalen an seinem Ausgang.

Wenn die Person spricht, empfängt das Mikrofon 5 die entsprechenden akustischen Signale und wandelt sie mit Hilfe eines beigefügten Vorverstärkers 6 in elektrische Signale um. Diese Signale werden zu einem Filter 10 übertragen. Das Filter 10 führt eine Spektralanalyse des elektrischen Signals durch und erzeugt eine charakteristische Folge von Merkmalen der Stimme der Person, die das Schlüsselwort äußert. Diese Folge von Merkmalen wird zu stimmspezifischen Merkmalen der befragten Person zusammengefaßt. Die stimmspezifischen Merkmale können eine Zusammenstellung der charakteristischen Frequenzen der Stimme sein, z. B. wie es in der US-PS 4 239 936 beschrieben ist.

Das Filter 10 ist mit einem Korrelationsrechner 11 verbunden. Der Korrelationsrechner 11 berechnet das Maß der Ähnlichkeit zwischen den aktuellen stimmspezifischen Merkmalen, die von dem Filter 10 erzeugt werden und stimmspezifischen Bezugsmerkmalen, die in einem Pufferspeicher 12 gespeichert sind. Die Bezugsmerkmale werden vom Speicher 4 in den Pufferspeicher 12 übertragen, wenn der Identifikationsprozeß beginnt und entspricht den früher gespeicherten stimmspezifischen Merkmalen der das Schlüsselwort äußernden Person, der die persönliche Identifikationsnummer oder Karte zugeordnet ist.

Die Signale vom Vorverstärker 6 werden gleichzeitig zu einer Schlüsselereignisdetektorschaltung 13 übertragen. Die Schlüsselereignisdetektorschaltung 13 ist mit einem Speicher 14 gekoppelt, der mit dem Detektor 9 verbunden ist. Der Speicher 14 speichert die digitalen Signale des Momentanbildes aus der Folge von von der elektronischen Kamera 8 gelieferten Momentanbildern, das zum Augenblick des Auftretens eines Schlüsselereignisses innerhalb des geäußerten Schlüsselwortes vorliegt.

Die Schlüsselereignisdetektorschaltung 13 umfaßt einen Integrator 15, dem das Signal vom Vorverstärker 6 zugeführt wird. Der Integrator 15 bildet ein zeitabhängiges Signal, das der Energie des elektrischen Signales vom Vorverstärker 6 entspricht. Ein solches zeitabhängiges Signal, das bei der Äußerung des Schlüsselwortes gebildet wird, ist in Figur 6 dargestellt. Der Integrator 15 kann ein Tiefpaßfilter sein, das das zeitabhängige Signal erzeugt. Wie Figur 6 zeigt, kann das zeitabhängige Signal in digitaler Weise entwickelt werden, wenn aufeinanderfolgend das Quadrat des Mittelwertes der Amplituden des elektrischen Signals vom Vorverstärker 6 für aufeinanderfolgende Intervalle A1, A2..., AN von ungefähr 10 bis 20 Millisekunden gebildet wird, und zwar über eine festgelegte Zeitdauer ZF (Zeitfenster genannt). Die Zeiten A1, A2, ..., AN überlappen sich (s. Figur 6). Die Multiplikationen der benannten Zeitereignisse $t_0$ bis $t_n$ in Figur 6 werden dazu benutzt, um die Form des Energiesignals festzulegen. Für jedes Zeitereignis $t_0$ bis $t_n$ wird ein verschiedenes Momentanbild der Mundregion erfaßt (s. Figur 3 bis 5). Ein Integrator dieser Art ist z. B. aus der US-PS 4 109 237 bekannt.

Der Integrator 15 ist mit einer Steuereinheit 16 verbunden, die den Beginn des Schlüsselwortes ($t_0$ in Figur 6) durch Analyse des Ausgangssignals vom Integrator 15 feststellt. Die Steuereinheit 16 kann z. B. der US-PS 4 239 936 entnommen werden. Zur Feststellung des Beginns des Schlüsselwortes überprüft die Steuereinheit 16, ob die Amplitude des Signals größer ist als eine Startschwelle S1 in Figur 6. Wenn dier Steuereinheit 16 den Beginn des Steuerwortes festgestellt hat, aktiviert sie einen Komparator 17, der einerseits mit der Steuereinheit 16 und andererseits mit einer Detektoreinheit 18 zur Feststellung einer Signalflanke gekoppelt ist. Der Komparator 17 vergleicht charakteristische Flankenmerkmale des Energiesignals (dargestellt z. B. durch die Zeitereignisse innerhalb des Zeitfensters) mit vorher gespeicherten Flankenmerkmalen, die in einem Pufferspeicher 21 gespeichert sind und die das Schlüsselereignis definieren und dadurch das Auftreten des Schlüsselwortes feststellen. Die charakteristischen Flankenmerkmale, die zur Definition des Schlüsselereignisses verwendet werden, können auf vielfache Weise ausgewählt werden. Z. B. kann dazu der Augenblick des Auftretens der Startschwelle einer bestimmten Größe gefolgt von Signalenergiegrößen zu zwei bestimmten aufeinanderfolgenden Zeitereignissen $t_2$ und $t_4$ innerhalb des ausgewählten Zeitfensters verwendet werden. Das Schlüsselereignis wird dabei eher in Form von relativen Größen der Schwelle und der Amplituden zum Zeitpunkt $t_2$ und $t_4$ als in Form von absoluten Größen, die Änderungen unterworfen wären, festgelegt werden. Der Schaltkreis, der zur Feststellung des Schlüsselereignisses notwendig ist, kann in bekannter Weise aufgebaut sein (z. B. Schwellwertdetektoren, Zähler, Komparatoren und logische Schaltkreise verwenden).

Wenn der Komparator 17 das Auftreten des Schlüsselereignisses festgestellt hat, gibt er ein Speichersignal zum Speicher 14, das diesen veranlaßt, das Momentanbild der Mundregion zum Auftreten des Schlüsselereignisses einzuspeichern. Z. B. kann in den Speicher 14 das Momentanbild des verzerrten Gittermusters nach Figur 4 eingespeichert werden. Dies ist dann der Fall, wenn das Zeitereignis $t_4$ durch Erfassung der Schwelle, der Amplitude zum Zeitpunkt $t_2$ und der Amplitude zum Zeitpunkt $t_4$ innerhalb des Zeitfensters festgestellt worden ist. Ein zweiter Korrelationsrechner 19 ist mit dem Speicher 14 verbunden. Der zweite Korrelationsrechner berechnet eine zweite Korrelationsrate, die dem Ausmaß der Ähnlichkeit zwischen dem Momentanbild, das in Speicher 14 gespeichert ist, und einem Momentanreferenzbild, das im Pufferspeicher 20 gespeichert ist und dem zweiten Korrelationsrechner 19 zugeführt wird, entspricht.

Der Pufferspeicher 20 ist weiterhin mit der Mikroprozessoreinheit 2 verbunden. Das Bezugsmomentanbild wird vom Speicher 4 in den Pufferspeicher 20 übernommen, wenn das Identifikationsverfahren begonnen wird. Es entspricht dem früher gespeicherten Momentanbild der Mundregion der Person, die durch die Eingangsinformation festgelegt wird und zwar zum Schlüsselereignis, nach dem vorher ein Gittermuster auf den Mund projeziert worden ist, das bei der Äußerung des Schlüsselwortes verzerrt worden ist.

Die Pufferspeicher 12, 20 und 21 sind zur Datenübertragung mit der Mikroprozessoreinheit 2 über einen Datenbus 22 verbunden. Die Bezugsstimmerkmale, die Bezugsmomentanbilder und die Energiesignalmerkmale (d. h. Schwelle und Signalgrößen), die das Schlüsselereignis bei der Äußerung von jedem möglichen Schlüsselwort durch eine Mehrheit von überprüften bekannten Personen festlegen, sind im Hauptspeicher 4 gespeichert, der von der Mikroprozessoreinheit 2 entsprechend dem gewählten Schlüsselwort und Person, die in der Eingangsinformation genannt ist, adressiert wird. Die Pufferspeicher 12, 20 und 21 werden mit Vergleichsdaten entsprechend dem Schlüsselwort, das der Person auf der Anzeige 4 angezeigt wird, geladen.

Der erste Korrelationsrechner 11 und der zweite Korrelationsrechner 19 sind mit der Mikroprozessoreinheit 2, die eine Entscheidungseinheit 23 enthält, verbunden. Die Mikroprozessoreinheit 2 vergleicht die erste Korrelationsrate, die durch den ersten Korrelationsrechner 11 berechnet worden ist und die zweite Korrelationsrate, die durch den zweiten Korrelationsrechner 19 berechnet worden ist, mit vorher festgelegten Korrelationsraten, die in dem Speicher 4 der Mikroprozessoreinheit 2 gespeichert sind. Wenn sowohl die erste als auch die zweite Korrelationsrate über den vorgegebenen Vergleichskorrelationsraten liegen, dann ist die Identität der befragten Person mit der Person, die der Eingangsnummer oder Karte zugeordnet ist, festgestellt. Wenn eine der Raten unterhalb der entsprechenden Vergleichsrate liegt, wird Nichtidentität festgestellt und der Zugang wird verweigert. Das Ergebnis des Überprüfungsprozesses wird auf der Anzeige 3 dargestellt.

Ein Ausführungsbeispiel des zweiten Korrelationsrechners 19 ist in Fig. 2 gezeigt. Der zweite Korrelationsrechner 19 umfaßt ein UND-Glied 24, das mit einem Addierer 25 verbunden ist. Die Momentanbilder, die in digitaler Form in dem Speicher 14 und dem Pufferspeicher 20 gespeichert sind, werden durch sequentielle Adressierung abgerufen. Der Addierer 25 zählt, immer wenn eine Koinzidenz zwischen dem Referenzsignal 26 vom Pufferspeicher 20 und dem Momentanbild 27 vom Speicher 14 auftritt. Ein zusätzliches UND-Glied 28, das mit dem Ausgang des Addierers 25 verbunden ist, dient als Schalter, um die Ergebnisse des Korrelationsprozesses zu der Mikroprozessoreinheit 2 zu übertragen, wenn diese ein Zählimpuls 29 an das UND-Glied 28 anlegt. Die Mikroprozessoreinheit 2 legt weiterhin ein Freigabesignal 30 an den Addierer 25 an.

Zur Erzeugung der Momentanbilder wird im Ausführungsbeispiel die Mundregion verwendet. Es ist jedoch möglich, auch andere Teile des Gesichtes zur Erzeugung der Momentanbilder zu verwenden, wenn sich diese beim Aussprechen eines Schlüsselwortes verändern.

**Patentansprüche**

1. Verfahren zur Identifizierung einer Person durch Sprach- und Gesichtserkennung, dadurch gekennzeichnet, daß eine charakteristische Folge von Stimmerkmalen bei der Äußerung eines vorgegebenen Schlüsselwortes durch die zu identifizierende Person gebildet wird, daß ein Momentanbild eines durch die Äußerung des Schlüsselwortes sich verändernden Teiles des Gesichtes der Person beim Auftreten eines Schlüsselereignisses gebildet wird, und daß zur Feststellung der Identität oder Nichtidentität der Person sowohl die Folge der Stimmerkmale als auch das Momentanbild herangezogen werden.

2. Verfahren zur Identifizierung einer Person durch Sprach- und Gesichtserkennung, dadurch gekennzeichnet, daß eine charakteristische Folge von Stimmerkmalen bei der Äußerung eines vorgegebenen Schlüsselwortes durch die zu identifizierende Person gebildet wird, daß eine Folge von Momentanbildern eines durch die Äußerung des Schlüsselwortes sich verändernden Teiles des Gesichtes der Person beim Auftreten eines Schlüsselereignisses gebildet wird, und daß zur Feststellung der Identität oder Nichtidentität der Person sowohl die Folge der Stimmerkmale als auch die Folge der Momentanbilder herangezogen werden.

3. Verfahren nach Anspruch 1 oder 2, dadurch gekennzeichnet, daß das vorgegebene Schlüsselwort zur Person auf Zugangsanforderung hin übertragen wird.

4. Verfahren nach Anspruch 3, dadurch gekennzeichnet, daß ein Gittermuster auf den durch die Äußerung des Schlüsselwortes sich verändernden Teil des Gesichtes der Person projeziert wird.

5. Einrichtung zur Durchführung des Verfahrens nach einem der vorhergehenden Ansprüche, dadurch gezeichnet, daß eine Spracherkennungsschaltung zur Erzeugung der charakteristischen Folge der Stimmerkmale bei der Äußerung des Schlüsselwortes durch die zu identifizierende Person vorgesehen ist, daß eine Gesichtserkennungsschaltung zur Erzeugung eines oder mehrere Momentanbilder eines durch die Äußerung des Schlüsselwortes sich verändernden Teiles des Gesichtes der Person beim Auftreten eines Schlüsselereignisses vorgesehen ist und daß eine Identifizierungsschaltung zur Feststellung der Identität oder Nichtidentität der Person sowohl mit Hilfe der Folge der Stimmerkmale als auch der Momentanbilder vorgesehen ist.

6. Einrichtung nach Anspruch 5 gekennzeichnet durch eine Spracherkennungsschaltung aus einem Mikrofon (5) zur Erzeugung von der Äußerung des vorgegebenen Schlüsselwortes durch die Person entsprechenden Signalen, aus einem Vorverstärker (6) der die von dem Mikrofon (5) abgegebenen Signale verstärkt und aus einem Filter (10), der die vom Vorverstärker (6) abgegebenen Signale in eine Folge von stimmspezifischen Merkmalen umwandelt.

7. Einrichtung nach Anspruch 5 oder 6 gekennzeichnet durch eine Gesichtserkennungsschaltung, die einen durch die Äußerung des Schlüsselwortes sich verändernden Teil des Gesichtes abtastet, um eine Folge von Momentanbildern zu erzeugen, die das Auftreten eines Schlüsselereignisses feststellt und die Folge der Momentanbilder zum Zeitpunkt des Auftretens des Schlüsselereignisses speichert.

8. Einrichtung nach Anspruch 7, gekennzeichnet durch die Gesichtserkennungsschaltung aus einer elektronischen Kamera (8), die Abtastsignale entsprechend der Folge der Momentanbilder des durch die Äußerung des Schlüsselwortes sich verändernden Teils des Gesichtes erzeugt, aus einem Detektor (9), der mit der elektronischen Kamera (8) verbunden ist und die von dieser abgegebenen Signale in digitale Signale umwandelt, aus einem Speicher (14), der zur Übernahme der digitalen Signale mit dem Detektor (9) verbunden ist, und aus einer Schlüsselereignisfeststellungsschaltung (13), die den Speicher (14) derart steuert, daß dieser die digitalen Signale der Augenblicksbilder zum Zeitpunkt des Auftretens des Schlüsselereignisses speichert.

9. Einrichtung nach Anspruch 8, gekennzeichnet durch die Schlüsselereignisfeststellungsschaltung (13) aus einem Integrator (15), der vom Vorverstärker (6) die Folge von Stimmerkmalen in Abhängigkeit der Äußerung eines Schlüsselwortes durch die Person erhält und der ein zeitabhängiges Signal erzeugt, das eine Funktion der Amplitude dieses Signales ist, aus einer Steuereinheit (16), die mit dem Integrator (15) zur Feststellung des Beginns des Schlüsselwortes mit Hilfe der Analyse des zeitvariierenden Signals vom Integrator (15) verbunden ist, aus einem Flankendetektor (18), der mit der Steuereinheit (16) verbunden ist, um das zeitabhängige Signal zur Feststellung von charakteristischen Flankenmerkmalen zu übernehmen, aus einem Komparator (17), der mit dem Flankendetektor (18) und der Steuereinheit (16) verbunden ist und der die charakteristischen Flankenmerkmale vom Flankendetektor mit vorgegebenen Bezugsflankenmerkmalen, die das Schlüsselereignis definieren, vergleicht und der bei Gleichheit ein Steuersignal zum Speicher (14) zur Übernahme des Momentanbildes überträgt.

10. Einrichtung nach einem der Ansprüche 6 bis 9, gekennzeichnet durch eine Identifizierungsschaltung aus einem ersten Korrelationsrechner (11), der eine erste Korrelationsrate zwischen der aktuellen Folge von stimmspezifischen Merkmalen und einer gespeicherten Folge von Referenzmerkmalen feststellt, aus einem zweiten Korrelationsrechner (19), der eine zweite Korrelationsrate zwischen dem gespeicherten aktuellen Momentanbild und dem Bezugsmomentanbild feststellt und aus einer Auswerteschaltung, die die Identität oder Nichtidentität der Person durch Auswertung der ersten und zweiten Korrelationsrate feststellt.

11. Einrichtung nach Anspruch 10, gekennzeichnet durch eine Auswertungsschaltung aus einem Pufferspeicher (12) zur Speicherung der Bezugsstimmerkmale, aus einem ersten Korrelationsrechner (11) der mit der Spracherkennungsschaltung und dem ersten Pufferspeicher (12) verbunden ist und der die erste Korrelationsrate zwischen der Folge der aktuellen Stimmerkmale und der Bezugsstimmerkmale berechnet, aus einem zweiten Pufferspeicher (20), der ein Bezugsmomentanbild speichert, aus einem zweiten Korrelationsrechner (19), der mit der Gesichtserkennungsschaltung und dem zweiten Pufferspeicher (20) verbunden ist und der eine zweite Korrelationsrate zwischen dem aktuellen Momentanbild von der Gesichtserkennungsschaltung und dem Bezugsmomentanbild berechnet, aus einem dritten Pufferspeicher (21), der die Referenzmerkmale zur Feststellung des Schlüsselereignisses enthält, aus einer Mikroprozessoreinheit (2), die die Bezugsstimmerkmale, das Bezugsmomentanbild und die Bezugsflankenmerkmale enthält, die die entsprechenden Informationen zu dem ersten, zweiten und dritten Pufferspeicher (11, 20, 21) überträgt und die mit den Korrelationsrechnern (11, 19) verbunden ist, um die Identität oder Nichtidentität der Person durch Auswertung der ersten und zweiten Korrelationsrate feststellt und aus einer Übertragungseinrichtung (3), die mit der Mikroprozessoreinheit (2) verbunden ist und die das vorgegebene Schlüsselwort in Abhängigkeit der Anforderung zur Person überträgt.

**Claims**

1. A method of identifying a person by speech and face recognition, characterised in that a characteristic sequence of voice features is formed when a given key word is uttered by the person to be identified, that an instantaneous image of a part of the person's face, which changes when the key word is uttered, is formed on the occurrence of a key event, and that both the sequence of voice features and the instantaneous image are used to establish the identity or non-identity of the person.

2. A method of identifying a person by speech and face recognition, characterised in that a characteristic sequence of voice features is formed when a predetermined key word is uttered by the person to be identified, that a sequence of instantaneous images of a part of the person's face, which changes when the key word is uttered, is formed on the occurrence of a key event, and that both the sequence of voice features and the sequence of instantaneous images are used to establish the identity or non-identity of the person.

3. A method as claimed in claim 1 or 2 characterised in that the predetermined key word to the person is communicated in response to a request.

4. A method as claimed in claim 3, characterised in that a grid pattern is projected on to that part of the person's face which changes as a result of the utterance of the key word.

5. A device for the execution of the method claimed in one of the preceding claims, characterised in that a speech recognition circuit is provided for the production of the characteristic sequence of voice features on the utterance of the key word by the person who is to be identified, that a face recognition circuit is provided for the production of one or more than one instantaneous image of a part of the person's face which changes as a result of the utterance of the key word on the occurrence of a key event, and that an identification circuit is provided for the establishment of the identity or non-identity of the person both with the assistance of the voice features and with the assistance of the instantaneous images.

6. A device as claimed in claim 5, characterised by a speech recognition circuit comprising a microphone (5) which serves to produce signals which correspond to the utterance of the given key word by the person, a preliminary amplifier (6) which amplifies the signals emitted from the microphone (5), and a filter (10) which converts the signals emitted from the preliminary amplifier (6) into a sequence of voice-specific features.

7. A device as claimed in claim 5 or 6, characterised by a face recognition circuit which scans a part of the face which changes on the utterance of the key word in order to produce a sequence of instantaneous images, which establishes the occurrence of a key event, and which stores the sequence of instantaneous images at the time of the occurrence of the key event.

8. A device as claimed in claim 7, characterised by the face recognition circuit comprising an electronic camera (8) which produces scanning signals corresponding to the sequence of instantaneous images of that part of the face which changes on the utterance of the key word, further comprising a detector (9) which is connected to the electronic camera (8) and converts the signals emitted from the electronic camera into digital signals, further comprising a store (14) which is connected to the detector (9) for the transfer of the digital signals, and further comprising a key event establishing circuit (13) which controls the store (14) in such manner that the store stores the digital signals of the instantaneous images at the time of the occurrence of the key event.

9. A device as claimed in claim 8, characterised by the key event establishing circuit (13) comprising an integrator (15) which is supplied by the preliminary amplifier (6) with the sequence of voice features in dependence upon the utterance of a key word by the person, and which produces a time-dependent signal which is a function of the amplitude of this signal, further comprising a control unit (16) which is connected to the integrator (15) in order to establish the start of the key word with the assistance of the analysis of the time-varying signal from the integrator (15), further comprising a flank detector (18) which is connected to the control unit (16) for the transfer of the time-dependent signal for the establishment of characteristic flank features, further comprising a comparator (17) which is connected to the flank detector (18) and to the control unit (16) and which compares the characteristic flank features of the flank detector with predetermined reference flank features which define the key event, and which, in the event of identity, transmits a control signal to the store (14) for the transfer of the instantaneous image.

10. A device as claimed in one of the claims 6 to 9, characterised by an identification circuit comprising a first correlation computer (11) which establishes a first correlation rate between the current sequence of voice-specific features and a stored sequence of reference features, further comprising a second correlation computer (19) which establishes a second correlation rate between the stored current instantaneous image and the reference instantaneous image, and further comprising an analysis circuit which establishes the identity or non-identity of the person by the analysis of the first and second correlation rates.

11. A device as claimed in claim 10, characterised by an analysis circuit comprising a first buffer store (12) for the storage of the reference voice features, comprising a first correlation computer (11) which is connected to the speech recognition circuit and to the first buffer store (12) and which calculates the first correlation rate between the sequence of current voice features and the reference voice features, comprising a second buffer store (20) which stores a reference instantaneous image, comprising a second correlation computer (19) which is connected to the face recognition circuit and to the second buffer store (20) and which calculates a second correlation rate between the current instantaneous image from the face recognition circuit and the reference instantaneous image, comprising a third buffer store (21) which contains the reference features for the establishment of the key event, comprising a microprocessor unit (2) which contains the reference voice features, the reference instantaneous image and the reference flank features, which transfers the corresponding information items to the first, second and third buffer stores (11, 20, 21) and which is connected to the correlation computers (11, 19) in order to establish the identity or non-identity of the person by the analysis of the first and second correlation rates, and further comprising a transfer device (3) which is connected to the microprocessor unit (2) and which transfers the given key word to the person in dependence upon a request.

## Revendications

1. Procédé pour identifier une personne par reconnaissance de la parole et du visage, caractérisé en ce que l'on forme une succession caractéristique de caractères de la voix à la prononciation d'un mot de passe préfixé par la personne à identifier, que l'on forme une image instantanée d'une partie du visage de la personne changeant par la prononciation du mot de passe à un événement clé et que, pour établir l'identité ou la non-identité de la personne avec une personne connue, on fait appel à la fois à la succession des caractères de la voix et à l'image instantanée.

2. Procédé pour identifier une personne par reconnaissance de la parole et du visage, caractérisé en ce que l'on forme une succession caractéristique de caractères de la voix à la prononciation d'un mot de passe préfixé par la personne à identifier, que l'on forme une succession d'images instantanées d'une partie du visage de la personne changeant par la prononciation du mot de passe à un événement clé et que, pour établir l'identité ou la non-identité de la personne avec une personne connue, on fait appel à la fois à la succession des caractères de la voix et aux images instantanées.

3. Procédé selon la revendication 1 ou 2, caractérisé en ce que l'on transmet le mot de passe préfixé à la personne à sa demande d'accès.

4. Procédé selon la revendication 3, caractérisé en ce que l'on projette un motif de réseau sur la partie du visage de la personne changeant par la prononciation du mot de passe.

5. Dispositif pour la mise en œuvre du procédé selon l'une des revendications précédentes, caractérisé en ce qu'il comprend un montage de reconnaissance de la parole pour produire la succession caractéristique des caractères de la voix à la prononciation du mot de passe par la personne à identifier, un montage de reconnaissance du visage pour produire une ou plusieurs images instantanées d'une partie du visage de la personne changeant par la prononciation du mot de passe à un événement clé, ainsi qu'un montage d'identification pour déterminer l'identité ou la non-identité de la personne avec une personne connue à l'aide à la fois de la succession de caractères de la voix et des images instantanées.

6. Dispositif selon la revendication 5, caractérisé par un montage de reconnaissance de la parole constitué d'un microphone (5) pour produire des signaux correspondant à la prononciation du mot de passe préfixé par la personne, d'un préamplificateur (6) qui amplifie les signaux délivrés par le microphone (5) et d'un filtre (10) qui transforme les signaux délivrés par le préamplificateur (6) en une succession de caractères spécifiques de la voix.

7. Dispositif selon la revendication 5 ou 6, caractérisé par un montage de reconnaissance du visage qui explore une partie du visage changeant par la prononciation du mot de passe, afin de produire une succession d'images instantanées qui détermine l'apparition d'un événement clé et mémorise la succession des images instantanées au moment de l'apparition de l'événement clé.

8. Dispositif selon la revendication 7, caractérisé par un montage de reconnaissance du visage qui est constitué d'une caméra électronique (8) qui produit des signaux d'exploration conformément à la succession des images instantanées de la partie du visage changeant par la prononciation du mot de passe, d'un détecteur (9) qui est relié à la caméra électronique (8) et qui transforme les signaux délivrés par celle-ci en signaux numériques, d'une mémoire (14) qui est connectée au détecteur (9) pour la reprise des signaux numériques, ainsi que d'un montage de détermination d'événement clé (13) qui commande la mémoire (14) de manière que celle-ci mémorise les signaux numériques des images instantanées au moment de l'apparition de l'événement clé.

9. Dispositif selon la revendication 8, caractérisé par un montage de détermination d'événement clé (13) constitué d'un intégrateur qui reçoit du préamplificateur (6) la succession de caractères de la voix en fonction de la prononciation d'un mot de passe par la personne et qui produit un signal en fonction du temps qui est une fonction de l'amplitude de ce signal, d'une unité de commande (16) reliée à l'intégrateur (15) pour la détermination du début du mot de passe à l'aide de l'analyse du signal variant avec le temps de l'intégrateur (15), d'un détecteur de flanc (18), relié à l'unité de commande (16), pour reprendre le signal en fonction du temps pour la détermination de caractères de flanc caractéristiques, d'un comparateur (17) relié au détecteur de flanc (18) et à l'unité de commande (16) et comparant les caractères de flanc caractéristiques fournis par le détecteur avec des caractères de flanc de référence préfixés, qui définissent l'événement clé, et qui, en cas d'égalité, transmet un signal de commande à la mémoire (14) en vue de la reprise de l'image instantanée.

10. Dispositif selon une des revendications 6 à 9, caractérisé par un montage d'identification constitué d'un premier calculateur de corrélation (11), déterminant un premier coefficient de corrélation entre la succession actuelle de caractères spécifiques de la voix et une succession mémorisée de caractères de référence, d'un second calculateur de corrélation (19), déterminant un second coefficient de corrélation entre l'image instantanée actuelle, mémorisée, et l'image instantanée de référence, ainsi que d'un montage d'exploitation qui détermine l'identité ou la non-identité de la personne par exploitation du premier et du second coefficient de corrélation.

11. Dispositif selon la revendication 10, caractérisé par un montage d'exploitation constitué d'une première mémoire tampon (12) pour mémoriser les caractères de voix de référence, d'un premier calculateur de corrélation (11) relié au montage de reconnaissance de la voix et à la première mémoire tampon (12) et calculant le premier coefficient de corrélation entre la succession des caractères de voix actuels et les caractères de voix de référence, d'une seconde mémoire tampon (20) qui mémorise une image instantanée de référence, d'un second calculateur de corrélation (19) relié au montage de reconnaissance du visage et à la seconde mémoire tampon (20) et calculant un second coefficient de corrélation entre l'image instantanée actuelle du montage de reconnaissance du visage et l'image instantanée de référence, d'une troisième mémoire tampon (21) qui contient les caractères de référence pour déterminer l'événement clé, d'une unité à microprocesseur (2) qui contient les caractères de voix de référence, l'image instantanée de référence et les caractères de flanc de référence, laquelle transmet les informations correspondantes à la première, la seconde et la troisième mémoire tampon (11, 20, 21) et qui est reliée aux calculateurs de corrélation (11, 19) pour établir l'identité ou la non-identité de la personne par exploitation du premier et du second coefficient de corrélation, ainsi que d'un dispositif de transmission (3) relié à l'unité à microprocesseur (2) et transmettant le mot de passe préfixé à la personne en fonction de la demande.

FIG 1

EINGABE-STATION

ANZEIGE

CPU

SPEICHER

KORRELATIONS-RECHNER

PUFFER-SPEICHER

PUFFER-SPEICHER

PUFFER-SPEICHER

KORRELATIONS-RECHNER

FILTER

INTE-GRIERER

STEUER-EINHEIT

COMPA-RATOR

FLANKEN-DETECTOR

SPEICHER

VOR-VERSTÄRKER

PROJEC-TOR

DETECTOR

CAMERA

## FIG 2

ADDIERER

26  30  25  29

27  24  28

## FIG 3

$t_0$

## FIG 4

$t_4$

## FIG 5

$t_N$

## FIG 6

ENERGIESIGNAL

$t_1$ $t_2$ $t_3$ $t_4$ $t_N$

S1

ZEIT

$t_0$

A1  A2  A3  AN

ZF

2